# NEUE EUROPÄISCHE PATENTSCHRIFT

(11) **EP 1 388 415 B2**
(45) Veröffentlichungstag und Bekanntmachung des Hinweises auf die Entscheidung über den Einspruch: **07.09.2011**
(45) Hinweis auf die Patenterteilung: 11.10.2006
(21) Anmeldenummer: 03015739.0
(22) Anmeldetag: 10.07.2003
(51) Int. Cl.: B32B 27/32, C08J 5/18, B65D 75/58

(54) **Siegelfähige Folie für Aufreissverpackungen**
Heat sealable foil for tearable packagings
Feuille thermocollante pour emballages déchirables

(30) Priorität: 09.08.2002 DE 10236502
(43) Veröffentlichungstag der Anmeldung: 11.02.2004
(73) Patentinhaber: Nordenia Deutschland Gronau GmbH, 48599 Gronau (DE)
(72) Erfinder: Niepelt, Ralf, 48599 Gronau (DE)
(74) Vertreter: Albrecht, Rainer Harald

(56) Entgegenhaltungen:
- EP-A- 0 968 816
- WO-A-01/64786
- DATABASE WPI Section Ch, Week 199621 Derwent Publications Ltd., London, GB; Class A17, AN 1996-205628 XP002263210 & JP 08 073618 A (MITSUI PETROCHEM IND CO LTD), 19. März 1996 (1996-03-19)

## Beschreibung

Die Erfindung betrifft die Verwendung einer siegelfähigen Folie zur Herstellung von Aufreißverpackungen.

Herkömmliche Blas- oder Flachfolien weisen sehr unterschiedliche mechanische Eigenschaften in Längs- und Querrichtung auf. Während Folien aus Polypropylen vorzugsweise in Maschinenlaufrichtung reißen, pflanzen sich Risse in Polystyrolfolien vorzugsweise quer zur Maschinenlaufrichtung fort. Die anisotropen mechanischen Eigenschaften sind beim Gebrauch dieser Folien als Folienverpackungen nachteilig. Beim Öffnen einer Folienverpackung besteht insbesondere das Problem, dass die Folienverpackung unkontrolliert aufreißt.

Als Folienwerkstoffe sind ferner Cycloolefin-Copolymere bekannt (Verpackungs-Rundschau 9/98, Seiten 52 bis 54). Die Rohstoffbasis für Cycloolefin-Copolymere sind Ethylen und Dicyclopentadien, aus denen das Comonomer Norbornen gewonnen wird. Durch Lösungsmittelpolymerisation mit Ethylen unter Verwendung von Metallocenkatalysatoren werden daraus Cycloolefin-Copolymere, abgekürzt COC, hergestellt. Cycloolefin-Copolymere sind amorphe, relativ steife und spröde, hochtransparente Kunststoffe, deren Glasübergangstemperaturen durch das Einbauverhältnis von Ethylen und Norbornen veränderbar sind. Aufgrund des spröden Charakters der Polymere besitzen die Folien eine geringe Reißdehnung und neigen zum Brechen, wenn sie stark gebogen werden. Die mechanischen Eigenschaften dieser Materialien können durch Mischung mit Polyolefinen modifiziert werden.

Aus EP 1 213 138 A1 sind tiefziehfähige Verbundfolien bekannt, die eine Schicht aus Cycloolefin-Copolymer und mindestens eine Schicht aus einem Polyolefin aufweisen. Die Verbindung zwischen der COC-Schicht und der Polyolefin-Schicht erfolgt durch Haftvermittler, z. B. auf der Basis eines linearen Polyethylene. JP 8073618 A beschreibt einen einschichtigen Film zur Herstellung von Lebensmittel- und alzneimittelverpackungen der eine Mischung aus 2 bis 80 Gew% eines Cycloolefin copolymeren und 80 bis 98 Gew% eines kristallinischen Polyolefins enthält.

Der Erfindung liegt die Aufgabe zugrunde, eine siegelfähige Folie zur Herstellung von Aufreißverpackungen anzugeben, die beim Öffnen der Verpackung nicht unkontrolliert aufreißt.

Gegenstand der Erfindung und Lösung dieser Aufgabe ist die Verwendung einer siegelfähigen Folie, gemäß Patentanspruch 1 oder Patentanspruch 2. Vorzugsweise wird als Cycloolefin-Copolymer ein unter Verwendung von Metallocenkatalysatoren hergestelltes Ethylen-Norbornen-Copolymer eingesetzt. Die Abmischung des cycloolefinischen Copolymers erfolgt vorzugsweise mit einem Polyethylen mit niedriger Dichte und linearer Struktur, insbesondere LLDPE oder VLDPE. Ferner sind zur Abmischung Ethylen-Copolymer, z. B. Ethylen/Vinylacetat-Copolymer (EVA), EBA, EAA u.dgl. geeignet. Für Aufreißverpackungen, die höheren Temperaturen ausgesetzt sind, wird als Polyolefin zur Abmischung mit COC vorzugsweise Polypropylen verwendet.

Erfindungsgemäß wird ausgenutzt, dass eine Folie, die als zumindest dreischichtige durch Coextrusion hergestellte Verbundfolie zumindest in einer Schicht aus einer Polymermischung aus COC und einem Polyolefin besteht, in Folienlängs- und -querrichtung ausgeglichene mechanische Eigenschaften aufweist und insbesondere ausgeglichene Ein- und Weiterreißeigenschaften besitzt. Ein beim Einreißen der Folie entstehender Riss setzt sich sowohl in Folienlängsrichtung als auch in Folienquerrichtung jeweils geradlinig fort. Aus diesem Material hergestellte Verpackungen, z. B. in Form von Beuteln, können daher geöffnet werden, ohne dass die Verpackung unkontrolliert aufreißt. Perforationen oder Einreißkerben sind entbehrlich. Zusätzlich zeichnet sich eine solche Folie durch eine gute Steifigkeit und damit Stanz- und Schneidbarkeit aus und ist bei ausreichendem Anteil an Polyolefin gut siegelbar.

Erfindungsgemäß werden siegelfähige Verbundfolien zur Herstellung von Aufreißverpackungen verwendet, die mindestens drei Schichten aufweisen. Die Verbundfolie kann eine Kernschicht aus einem Polyolefin und beidseits angrenzende Schichten aus Polymermischungen von Cycloolefin-Copolymeren und Polyolefinen aufweisen. Im Rahmen der Erfindung liegt es auch, dass eine Außenschicht als Siegelschicht aus einem Polyolefin besteht und die andere Außenschicht aus einem Cycloolefin-Copolymer oder einer Polymermischung mit hohem Cycloolefin-Copolymer-Anteil ausgebildet ist. Für die Zwischenschichten werden Polymermischungen von Cycloolefin-Copolymeren und Polyolefinen verwendet, deren Polyolefingehalt zwischen den Werten in den Außenschichten liegt. Der Polyolefingehalt ändert sich stufenweise von einem hohen Wert an der Siegelschicht zu einem niedrigen Wert an der gegenüberliegenden Schicht, deren Eigenschaften durch den hohen COC-Anteil geprägt sind. Gemäß einer besonders bevorzugten Ausführung der Erfindung besitzt die Folie einen dreischichtigen Aufbau, wobei die Dicke der aus Polyolefin oder einer Polymermischung mit hohem Polyolefingehalt bestehenden Kernschicht ein Mehrfaches der Dicke der beiden Außenschichten beträgt.

Die im Rahmen der erfindungsgemäßen Lehre zur Herstellung von Aufreißverpackungen verwendete Folie weist eine Dicke von mindestens 15 µm auf und ist durch ein Flachfolienextrusionsverfahren oder ein Extrusions-Blasverfahren herstellbar. Die Folie kann vor der Weiterverarbeitung zur Aufreißverpackung durch Kaschieren, Bedrucken oder Beschichten, z. B. durch Aluminiumbeschichtungen, weiterveredelt werden.

### Ausführungsbeispiele

Die Ausführungsbeispiele betreffen dreischichtige, durch Coextrusion hergestellte Verbundfolien mit einem symmetrischen Schichtenaufbau A-B-A oder einem asymmetrischen Schichtenaufbau A-B-C.

### Beispiel 1:

Die Verbundfolie weist eine Gesamtdicke von 70 µm auf und hat einen symmetrischen Schichtenaufbau A-B-A mit
Schicht A: 10 µm
   80 Gew.% Cycloolefin-Copolymer
   20 Gew.% Polyethylen LLDPE C8
Schicht B: 50 µm
   100 Gew.% Polyethylen LLDPE C8

### Beispiel 2:

Die Verbundfolie weist eine Gesamtdicke von 50 µm auf und hat einen symmetrischen Schichtenaufbau A-B-A mit
Schicht A: 7 µm
   80 Gew.% Cycloolefin-Copolymer
   20 Gew.% Polyethylen LLDPE C8
Schicht B: 36 µm
   µm100 Gew.% Polyethylen LLDPE C8

### Beispiel 3:

Die Verbundfolie weist eine Gesamtdicke von 50 µm auf und hat einen asymmetrischen Schichtenaufbau A-B-C mit
Schicht A: 7 µm
   80 Gew.% Cycloolefin-Copolymer
   20 Gew.% Polyethylen LLDPE C8
Schicht B: 36 µm
   20 Gew.% Cycloolefin-Copolymer
   80 Gew.% Polyethylen LLDPE C8
Schicht C: 7 µm
   100 Gew.% Polyethylen LLDPE C8

Die Folien gemäß den Ausführungsbeispielen besitzen in Längs- und Querrichtung ausgeglichene mechanische Eigenschaften, insbesondere ausgeglichene Ein- und Weiterreißeigenschaften. In Maschinen- bzw. Längsrichtung MD und in Querrichtung CD wurden folgende mechanische Eigenschaften gemessen:

| | | | | Beispiel | Beispiel | Beispiel |
|---|---|---|---|---|---|---|
| | | | | 1 | 2 | 3 |
| Weiterreißeigenschaften nach Elmendorf ISO 6383-2 | | MD | mN | 1000-1400 | 400 - 600 | 250 - 450 |
| | | CD | mN | 1000-1400 | 400 - 600 | 250 - 450 |
| Festigkeiten DIN 53455 | | MD | N/inch N/25,4 mm | 40 - 50 | 25 - 35 | 23 - 33 |
| | | CD | N/inch N/25,4 mm | 40 - 50 | 25 - 35 | 23 - 33 |
| E-Modul DIN 53455 | | MD | N/mm² | 500 - 600 | 500 - 600 | 450 - 550 |
| | | CD | N/mm² | 450 - 550 | 500 - 600 | 450 - 550 |
| Dehnung DIN 53455 | | MD | % | 400 - 600 | 300 - 500 | 150 - 350 |
| | | CD | % | 400 - 600 | 300 - 500 | 150 - 350 |
| Streckspannung DIN 53455 | | MD | N/inch N/25,4 mm | 30 - 40 | 20 - 30 | 15 - 25 |
| | | CD | N/inch N/25,4 mm | 30 - 40 | 20 - 30 | 15 - 25 |
| Festigkeiten bei X% Dehnung DIN 53455 | 3% | MD | N/inch N/25,4 mm | 22 - 32 | 18 - 28 | 15 - 25 |
| | 5% | MD | N/inch N/25,4 mm | 28 - 38 | 22 - 32 | 15 - 25 |
| | 10% | MD | N/inch N/25,4 mm | 30 - 40 | 25 - 35 | 16 - 26 |
| | 3% | CD | N/inch N/25,4 mm | 22 - 32 | 18 - 28 | 13 - 23 |
| | 5% | CD | N/inch N/25,4 mm | 28 - 38 | 22 - 32 | 15 - 25 |
| | 10% | CD | N/inch N/25,4 mm | 30 - 40 | 25 - 35 | 16 - 26 |

Aus allen Folien konnten Beutelverpackungen hergestellt werden, die sich leicht öffnen ließen und ausgeglichene Ein- und Weiterreißeigenschaften in Längs- und Querrichtung aufwiesen.

## Patentansprüche

1. Verwendung einer siegelfähigen Folie,
die als mehrschichtige, durch Coextrusion hergestellte Verbundfolie zumindest in einer Schicht aus einer polymeren Mischung aus einem Cycloolefin-Copolymer (COC) und Polyolefin oder einem Ethylen-Copolymer besteht, wobei der COC-Anteil in der Polymermischung 20 bis 80 Gew.%, Rest Polyolefin bzw. Ethylen-Copolymer, beträgt,
zur Herstellung von Aufreißverpackungen, die ausgeglichene Ein- und Weiterreißeigenschaften in Folienquer- und Längsrichtung aufweisen, mit der Maßgabe, dass die Folie als Verbundfolie mindestens drei Schichten aufweist, wobei die Kernschicht aus einem Polyolefin und die beidseits angrenzenden Schichten aus Polymermischungen von Cycloolefin-Copolymer mit Polyolefinen bestehen.

2. Verwendung einer siegelfähigen Folie,
die als mehrschichtige, durch Coextrusion hergestellte Verbundfolie zumindest in einer Schicht aus einer polymeren Mischung aus einem Cycloolefin-Copolymer (COC) und Polyolefin oder einem Ethylen-Copolymer besteht, wobei der COC-Anteil in der Polymermischung 20 bis 80 Gew.%, Rest Polyolefin bzw. Ethylen-Copolymer, beträgt,
zur Herstellung von Aufreißverpackungen, die ausgeglichene Ein- und Weiterreißeigenschaften in Folienquer- und Längsrichtung aufweisen, mit der Maßgabe, dass die Verbundfolie mindestens drei Schichten aufweist, wobei eine Außenschicht als Siegelschicht aus einem Polyolefin besteht, wobei die andere Außenschicht aus einem Cycloolefin-Copolymer oder einer polymeren Mischung mit hohem Cycloolefin-Copolymer-Anteil ausgebildet ist und wobei für die Zwischenschichten Polymermischungen von Cycloolefin-Copolymerenj und Polyolefinen, deren Polyolefingehalt zwischen den Werten in den Außenschichten liegt, verwendet werden.

3. Verwendung einer siegelfähigen Folie nach Anspruch 1 oder 2, mit der Maßgabe, dass die Folie einen dreischichtigen Aufbau besitzt, wobei die Dicke der aus Polyolefin oder einer Polymermischung mit hohem Polyolefingehalt bestehenden Kernschicht ein Mehrfaches der Dicke der Außenschichten beträgt.

4. Verwendung einer siegelfähigen Folie nach einem der Ansprüche 1 bis 3, mit der Maßgabe, dass als Cycloolefin-Copolymer ein unter Verwendung von Metallocenkatalysatoren hergestelltes Ethylen-Norbomen-Copolymer eingesetzt wird.

5. Verwendung einer siegelfähigen Folie nach einem der Ansprüche 1 bis 4, mit der Maßgabe, dass als Polyolefin ein Polyethylen mit niedriger Dichte und linearer Struktur eingesetzt wird.

6. Verwendung einer siegelfähigen Folie nach einem der Ansprüche 1 bis 5, mit der Maßgabe, dass als Polyolefin ein Polypropylen eingesetzt wird.

7. Verwendung einer siegelfähigen Folie nach einem der Ansprüche 1 bis 6, mit der Maßgabe, dass die Folie eine Dicke von mindestens 15 µm aufweist.

8. Verwendung einer siegelfähigen Folie nach einem der Ansprüche 1 bis 7, mit der Maßgabe, dass die Folie durch ein Flachfolienextrusionsverfahren oder ein Extrusions-Blasverfahren hergestellt wird.

9. Verwendung einer siegelfähigen Folie nach einem der Ansprüche 1 bis 8, mit der Maßgabe, dass die Folie vor der Weiterverarbeitung zur Aufreißverpackung durch Kaschieren, Bedrucken oder Beschichten weiterveredelt wird.

## Claims

1. Use of a sealable film,
which, as a multi-layer laminate film, produced by means of coextrusion, comprises at least in one layer a polymer mixture of a cycloolefin copolymer (COC) and polyolefin or an ethylene copolymer, wherein the COC portion in the polymer mixture is 20 to 80 weightpercent, the remainder being polyolefin or ethylene copolymer,
for producing tear-open packages, which demonstrate balanced tear start and tear propagation properties in the crosswise and lengthwise direction of the film, wherein as a laminate film the film exhibits at least three layers, the core layer comprising a polyolefin and the adjacent layers on both sides comprising polymer mixtures of cycloolefin copolymer with polyolefins.

2. The use of a sealable film,
which, as a multi-layer laminate film, produced by means of coextrusion, comprises at least in one layer a polymer mixture of a cycloolefin copolymer (COC) and polyolefin or an ethylene copolymer, wherein the COC portion in the polymer mixture is 20 to 80 weightpercent, the remainder being polyolefin or ethylene copolymer,
for producing tear-open packages, which demonstrate balanced tear start and tear propagation properties in the crosswise and lengthwise direction of the film, wherein the composite film exhibits at least three layers, one outside layer as the sealing layer comprising a polyolefin, the other outside layer being formed from a cycloolefin copolymer or a polymer mixture having a high cycloolefin copolymer proportion and wherein polymer mixtures of cycloolefin copolymers and polyolefins having a polyolefin content between the values in the outside layers are used for the intermediate layers.

3. The use of a sealable film according to claim 1 or 2, wherein the film possesses a three-layer structure, the thickness of the core layer comprising polyolefin or a polymer mixture with a high polyolefin content being a multiple of the thickness of the outside layers.

4. The use of a sealable film according to one of the claims 1 to 3, wherein an ethylene norbornene copolymer produced using metallocene catalysts is used as the cycloolefin copolymer.

5. The use of a sealable film according to one of claims 1 to 4, wherein a polyethylene with a low density and a linear structure is used as the polyolefin.

6. The use of a sealable film according to one of the claims 1 to 5, wherein a polypropylene is used as the polyolefin.

7. The use of a sealable film according to one of the claims 1 to 6, wherein the film exhibits a thickness of at least 15 µm.

8. The use of a sealable film according to one of the claims 1 to 7, wherein the film is produced by means of a flat film extrusion process or an extrusion blowing process.

9. The use of a sealable film according to one of the claims 1 to 8, wherein the film is further finished by means of lamination, imprinting or coating before being further processed into tear-open packaging.

## Revendications

1. Utilisation d'une feuille apte au scellage
qui, en tant que feuille laminée fabriquée par coextrusion et comportant plusieurs couches, est constituée pour au moins une de ses couche d'un mélange polymère d'un copolymère cyclooléfinique (CCO) avec une polyoléfine ou un copolymère éthylénique, la part du CCO étant comprise entre 20 et 80 % en poids, le reste étant, respectivement, de la polyoléfine ou du copolymère éthylénique,
pour la fabrication d'emballages à ouverture déchirable qualifiés par le fait que la déchirure se crée et se prolonge d'une manière régulière tant dans le sens de la longueur que dans le sens de la largeur de ladite feuille, sous réserve qu'en tant que feuille laminée, ladite feuille comporte au moins trois couches, la couche du milieu étant constituée d'une polyoléfine et les couches adjacentes sur les deux côtés étant constituées de mélanges polymères de copolymères cyclooléfiniques avec des polyoléfines.

2. Utilisation d'une feuille apte au scellage,
qui, en tant que feuille laminée fabriquée par coextrusion et comportant plusieurs couches, est constituée pour au moins une de ses couche d'un mélange polymère d'un copolymère cyclooléfinique (CCO) avec une polyoléfine ou un copolymère éthylénique, la part du CCO étant comprise entre 20 et 80 % en poids, le reste étant, respectivement, de la polyoléfine ou du copolymère éthylénique,
pour la fabrication d'emballages à ouverture déchirable qualifiés par le fait que la déchirure se crée et se prolonge d'une manière régulière tant dans le sens de la longueur que dans le sens de la largeur de ladite feuille, sous réserve que ladite feuille laminée comporte au moins trois couches, l'une des couches extérieures jouant le rôle de couche de scellage et étant constituée d'une polyoléfine et l'autre couche extérieure étant constituée d'un copolymère cyclooléfinique ou d'un mélange polymère avec une teneur élevée en copolymères cyclooléfiniques et les couches intermédiaires étant réalisées en utilisant des mélanges polymères de copolymères cyclooléfiniques avec des polyoléfines, la teneur en polyoléfines desdits mélanges se situant entre les valeurs dans les couches extérieures.

3. Utilisation d'une feuille apte au scellage selon les revendications 1 ou 2, sous réserve que ladite feuille soit composée de trois couches, la couche du milieu étant constituée de polyoléfines ou d'un mélange polymère avec une teneur élevée en polyoléfines et ayant une épaisseur plusieurs fois supérieure à l'épaisseur des couches extérieures.

4. Utilisation d'une feuille apte au scellage selon l'une des revendications 1 à 3, sous réserve que le copolymère cyclooléfinique mis en oeuvre soit un copolymère d'éthylène et de norbornène synthétisé en utilisant des catalyseurs de type métallocène.

5. Utilisation d'une feuille apte au scellage selon l'une des revendications 1 à 4, sous réserve que la polyoléfine mise en oeuvre soit un polyéthylène basse densité avec une structure linéaire.

6. Utilisation d'une feuille apte au scellage selon l'une des revendications 1 à 5, sous réserve que la polyoléfine mise en oeuvre soit un polypropylène.

7. Utilisation d'une feuille apte au scellage selon l'une des revendications 1 à 6, sous réserve que ladite feuille affiche une épaisseur d'au moins 15 µm

8. Utilisation d'une feuille apte au scellage selon l'une des revendications 1 à 7, sous réserve que ladite feuille soit fabriquée par un procédé d'extrusion de feuilles minces ou par un procédé d'extrusion-soufflage.

9. Utilisation d'une feuille apte au scellage selon l'une des revendications 1 à 8, sous réserve que ladite feuille soit améliorée par un doublage, une impression ou un revêtement avant d'être transformée en emballage à ouverture déchirable.
